# EUROPÄISCHE PATENTSCHRIFT

(11) **EP 3 139 806 B1**
(45) Veröffentlichungstag und Bekanntmachung des Hinweises auf die Patenterteilung: **17.07.2019**
(21) Anmeldenummer: 14722675.7
(22) Anmeldetag: 08.05.2014
(51) Int. Cl.: A47L 9/00

(54) **SELBSTFAHRENDES UND SELBSTLENKENDES BODENREINIGUNGSGERÄT UND VERFAHREN ZUM REINIGEN EINER BODENFLÄCHE**
SELF DRIVING AND SELF STEERING FLOOR CLEANING DEVICE AND METHOD FOR CLEANING A FLOOR SURFACE
DISPOSITIF DE NETTOYAGE DE SOL ROULANT ET MANOEUVRANT DE MANIÈRE AUTONOME ET MÉTHODE DE NETTOYAGE D'UNE SURFACE DE SOL

(43) Veröffentlichungstag der Anmeldung: 15.03.2017
(73) Patentinhaber: Alfred Kärcher SE & Co. KG, 71364 Winnenden (DE); robart GmbH, 4020 Linz (AT)
(72) Erfinder: HOFNER, Christian, 73642 Welzheim (DE); WURM, Christian, 71332 Waiblingen (DE); HÖNNIGE, Heiko, 71554 Weissach im Tal (DE); PFISTER, Barbara, 71554 Weissach im Tal (DE); DÜNNE, Markus, 48691 Vreden (DE); KOHLER, Norman, 72766 Mittelstadt (DE); BLUMHARDT, Heiko, 71686 Remseck (DE); ARTES, Harold, 4100 Ottensheim (AT); SCHAHPAR, Michael, 4030 Linz (AT)
(74) Vertreter: Hoeger, Stellrecht & Partner Patentanwälte mbB
(86) Internationale Anmeldenummer: PCT/EP2014/059499
(87) Internationale Veröffentlichungsnummer: WO 2015/169382

(56) Entgegenhaltungen:
- WO-A1-00/07492
- WO-A1-2009/132317
- WO-A2-2009/097354
- DE-A1-102008 014 912
- FR-A1- 2 658 437

## Beschreibung

Die Erfindung betrifft ein selbstfahrendes und selbstlenkendes Bodenreinigungsgerät, das eine Reinigungseinrichtung mit mindestens einem Reinigungsaggregat zum Reinigen einer Bodenfläche eines Raumes umfasst.

Außerdem betrifft die Erfindung ein Verfahren zum Reinigen einer Bodenfläche mit einem derartigen Bodenreinigungsgerät.

Mit einem Bodenreinigungsgerät der eingangs genannten Art kann eine autonome Reinigung der Bodenfläche durchgeführt werden. Gewünscht ist es dabei, eine möglichst flächendeckende Reinigung der Bodenfläche zu erzielen. Zu diesem Zweck ist es bekannt, die Bodenfläche anhand vorgegebener Reinigungsmuster zur reinigen, wobei sich das Bodenreinigungsgerät typischerweise an einer Karte der Bodenfläche orientiert. Die Karte kann während der Reinigung ad hoc erstellt oder durch eine Bedienperson vorgegeben werden. In der Karte sind typischerweise Begrenzungen des die Bodenfläche aufweisenden Raumes gekennzeichnet und innerhalb des Raumes vorhandene Hindernisse, wobei Begrenzungen und Hindernisse vom Bodenreinigungsgerät auch selbsttätig erkannt und in der Karte gespeichert werden können. Die Hindernisse werden bei einer Reinigung umfahren. Um eine möglichst flächendeckende Reinigung zu erzielen ist es bekannt, parallel zu den Hindernissen und/oder entlang Begrenzungen der Bodenfläche, d.h. Seitenwänden des Raumes, zu verfahren.

Die WO 00/07492 A1 beschreibt einen Reinigungsroboter, der einen von einem Gehäuse abstehenden Saugarm mit daran angeordneten Saugkopf aufweist. Der Saugarm kann relativ zum Gehäuse verschwenkt und teleskopartig ausgefahren werden. Ein Höhensensor am Saugkopf detektiert Hindernisse, die den Saugarm und Saugkopf nicht behindern, deren lichte Höhe jedoch nicht ausreicht, damit der gesamte Sauger diese Stelle passieren kann.

Aufgabe der vorliegenden Erfindung ist es, ein selbstfahrendes und selbstlenkendes Bodenreinigungsgerät und ein Verfahren zum Reinigen einer Bodenfläche mit einem solchen Bodenreinigungsgerät bereitzustellen, mit dem eine umfassendere Reinigung der Bodenfläche möglich ist.

Diese Aufgabe wird erfindungsgemäß durch ein selbstfahrendes und selbstlenkendes Bodenreinigungsgerät gelöst, das eine Reinigungseinrichtung mit mindestens einem Reinigungsaggregat zum Reinigen einer Bodenfläche eines Raumes umfasst, wobei ein innerhalb des Raumes angeordnetes Hindernis zumindest abschnittsweise frei von Kontakt mit der Bodenfläche ist, wobei das Bodenreinigungsgerät ferner eine Sendeeinheit umfasst zur Emission von auf das Hindernis und die Bodenfläche gerichteter Strahlung, um diese räumlich abzutasten, eine Detektionseinheit zum Erfassen reflektierter Strahlung und Bereitstellen eines diesbezüglichen Detektionssignals, eine mit der Detektionseinheit gekoppelte Steuereinheit sowie ein Fahrwerk zum Verfahren auf der Bodenfläche, das eine mit der Steuereinheit gekoppelte Antriebseinheit aufweist, wobei von der Steuereinheit anhand des Detektionssignals ermittelbar ist, ob zwischen dem Hindernis und der Bodenfläche ein Zwischenraum vorhanden ist, ein unterhalb des Hindernisses angeordneter Bodenflächenabschnitt bejahendenfalls als reinigbar angesehen wird und die Antriebseinheit ansteuerbar ist, das Bodenreinigungsgerät zum Reinigen des Bodenflächenabschnittes zu verfahren, wobei mindestens ein Reinigungsaggregat in den Zwischenraum eingreift, wobei die Antriebseinheit ansteuerbar ist, das Bodenreinigungsgerät während der Reinigung des Bodenflächenabschnittes in vorgegebenem oder vorgebbarem Abstand zum Hindernis zu verfahren, insbesondere parallel zum Hindernis.

In die vorliegende Erfindung fließt der Gedanke mit ein, dass innerhalb des Raumes ein Hindernis vorhanden sein kann, das die Bodenfläche zumindest abschnittsweise nicht kontaktiert, jedoch eine so geringe Höhe aufweist, dass das Bodenreinigungsgerät das Hindernis nicht unterfahren kann, um die Bodenfläche unterhalb des Hindernisses zu reinigen. Ein Hindernis, das die Bodenfläche zumindest abschnittsweise nicht kontaktiert, ist beispielsweise ein auf der Bodenfläche positioniertes Regal mit Regalfüßen oder einem Regalsockel, die bzw. der hinter einer Außenkontur des Hindernisses zurückbleiben. Denkbar ist auch ein Hindernis in Gestalt eines an einer Seitenwand des Raumes montierten Regales frei von Kontakt mit der Bodenfläche. Beim erfindungsgemäßen Bodenreinigungsgerät wird Strahlung zum räumlichen Abtasten auf das Hindernis und die Bodenfläche gerichtet und mit der Detektionseinheit erfasst, die der Steuereinheit ein diesbezügliches Detektionssignal bereitstellt. Die Steuereinheit kann anhand des Detektionssignals ermitteln, ob zwischen dem Hindernis und der Bodenfläche ein Zwischenraum vorhanden ist. Ist dies der Fall, geht die Steuereinheit davon aus, dass ein Bodenflächenabschnitt unterhalb des Hindernisses gereinigt werden kann. Die Antriebseinheit kann zum Verfahren des Bodenreinigungsgerätes angesteuert werden und der Bodenflächenabschnitt gereinigt werden. Weil das Bodenreinigungsgerät selbst das Hindernis nicht unterfahren kann, greift mindestens ein Reinigungsaggregat in den Zwischenraum ein und kontaktiert die Bodenfläche.

Als vorteilhaft erweist es sich, dass durch räumliches Abtasten des Hindernisses und der Bodenfläche kontaktlos festgestellt werden kann, ob unterhalb von Hindernissen reinigbare Bodenflächenabschnitte vorliegen. Eine Fahrt des Bodenreinigungsgerätes auf Kollision mit dem Hindernis kann dadurch vermieden werden. In Kenntnis des reinigbaren Bodenflächenabschnittes ist es ferner möglich, zu dessen Reinigung das Bodenreinigungsgerät so nah am Hindernis zu positionieren, dass es dieses (noch) nicht kontaktiert, jedoch mit mindestens einem Reinigungsaggregat so weit wie möglich in den Zwischenraum eingreift, um die Bodenfläche so flächendeckend wie möglich zu reinigen.

Die Ermittlung, ob unterhalb eines Hindernisses ein reinigbarer Bodenflächenabschnitt vorliegt, ist insbesondere ohne a priori-Wissen über das Vorhandensein eines Hindernisses möglich. Das Bodenreinigungsgerät kann vorzugsweise während der Bewegung über die Bodenfläche über die Detektion der den Raum räumlich abtastenden Strahlung das Vorhandensein von Hindernissen feststellen und zugleich ermitteln, ob unterhalb von diesen reinigbare Bodenflächenabschnitte vorhanden sind.

Ergänzend oder alternativ ist denkbar, dass im Bodenreinigungsgerät eine Karte des Raumes gespeichert ist, in der Hindernisse gekennzeichnet sind. Das Bodenreinigungsgerät kann Hindernisse gezielt anfahren, um gegebenenfalls unterhalb von diesen vorhandene Bodenflächenabschnitte zu ermitteln.

Die Antriebseinheit ist ansteuerbar, das Bodenreinigungsgerät während der Reinigung des Bodenflächenabschnittes in vorgegebenem oder vorgebbarem Abstand zum Hindernis zu verfahren. Dabei kann insbesondere vorgesehen sein, das Bodenreinigungsgerät während der Reinigung des Bodenflächenabschnittes parallel zum Hindernis zu verfahren.

"Reflexion" von Strahlung ist vorliegend nicht auf eine Retroreflexion beschränkt, umfasst diese aber. Reflexion umfasst vorliegend insbesondere auch die Streuung von Strahlung an einem Gegenstand wie der Bodenfläche oder dem Hindernis.

Von Vorteil ist es, wenn von der Steuereinheit die Relativposition des Bodenreinigungsgerätes und des Bodenflächenabschnittes ermittelbar ist. Der Bodenflächenabschnitt kann dadurch gezielt vom Bodenreinigungsgerät angefahren und gereinigt werden.

Günstig ist es, wenn das Bodenreinigungsgerät eine Speichereinheit umfasst, in der eine Karte des Raumes speicherbar ist, und eine Lokalisierungseinheit zum Lokalisieren der Position des Bodenreinigungsgerätes auf der Bodenfläche, und wenn die Position des Bodenflächenabschnittes auf der Bodenfläche ermittelbar und der Bodenflächenabschnitt in der Karte als reinigbar kennzeichenbar ist, wobei der Bodenflächenabschnitt vorzugsweise als unterhalb des Hindernisses oder eines Hindernisses positioniert kennzeichenbar ist. Die Feststellung, dass ein Bodenflächenabschnitt unterhalb eines Hindernisses reinigbar ist, kann durch Erfassung und Kennzeichnung in der Karte für zukünftige Reinigungsvorgänge gespeichert werden. Bei einer nachfolgenden Reinigung der Bodenfläche kann das Bodenreinigungsgerät den Bodenflächenabschnitt reinigen, um eine möglichst flächendeckende Reinigung der Bodenfläche vorzunehmen. Vorteilhafterweise ist die Eigenschaft des Bodenflächenabschnittes als unterhalb des Hindernisses positioniert ebenfalls gespeichert, damit das Bodenreinigungsgerät weiß, dass das Hindernis nicht unterfahren werden kann.

Denkbar ist auch, dass bei einer nachfolgenden Reinigung vom Bodenreinigungsgerät festgestellt wird, ob die Position des Hindernisses auf der Bodenfläche der in der Karte gespeicherten Position entspricht. Beispielsweise könnte das Hindernis, etwa ein Regal, umpositioniert worden sein. Stellt das Bodenreinigungsgerät dies durch räumliches Abtasten der Bodenfläche und des Hindernisses fest, kann die Karte mit der geänderten Position des Hindernisses aktualisiert werden. Dabei kann auch der in der Karte gekennzeichnete Bodenflächenabschnitt aktualisiert werden.

Vorteilhafterweise ist von der Steuereinheit die Höhe des Zwischenraums ermittelbar, und der Bodenflächenabschnitt wird nur gereinigt, wenn die Höhe größer ist als eine Mindesthöhe. Die Mindesthöhe kann vorgegeben oder vorgebbar sein. Beispielsweise entspricht die Mindesthöhe der Höhe mindestens eines Reinigungsaggregates um sicherzustellen, dass mindestens ein Reinigungsaggregat in den Zwischenraum eingreifen kann. Die Mindesthöhe kann sich jedoch von der Höhe des niedrigsten Reinigungsaggregates unterscheiden und geringer als diese sein. Dies ist beispielsweise dann der Fall, wenn als Reinigungsaggregat ein Tellerbesen mit schräggestellten Reinigungsborsten zum Einsatz kommt, welche in den Zwischenraum eingreifen können, ohne dass der Tellerbesen als Ganzes unterhalb des Hindernisses positioniert wird.

Vorzugsweise ist von der Steuereinheit die Erstreckung des Bodenflächenabschnittes unterhalb des Hindernisses in Ausbreitungsrichtung der Strahlung ermittelbar. Darunter kann vorliegend insbesondere verstanden werden, dass die "Tiefe" des Zwischenraums in Ausbreitungsrichtung der Strahlung ermittelt wird. Die Steuereinheit kann diese Information nutzen um festzustellen, wie weit ein Reinigungsaggregat in den Zwischenraum eingreifen kann.

Vorstehende Ausführungen zeigen, dass bei einer vorteilhaften Ausführungsform des Bodenreinigungsgerätes insbesondere ein dreidimensionales Messsystem zum räumlichen Abtasten des Hindernisses und der Bodenfläche vorhanden sein kann. Es können insbesondere die Relativposition des Bodenreinigungsgerätes und des Hindernisses sowie des Bodenflächenabschnittes ermittelt werden, die Höhe des Zwischenraums und/oder die Tiefe des Zwischenraumes.

Von Vorteil ist es, wenn abhängig von der ermittelten Erstreckung das Bodenreinigungsgerät so relativ zum Hindernis verfahrbar ist, dass das mindestens eine Reinigungsaggregat unterschiedlich weit in den Zwischenraum eingreift.

Beispielsweise kann das Bodenreinigungsgerät je nach Erstreckung des Bodenflächenabschnittes unterschiedlich nah am Hindernis positioniert werden.

Alternativ oder ergänzend kann vorgesehen sein, dass abhängig von der ermittelten Erstreckung mindestens ein Reinigungsaggregat relativ zum Bodenreinigungsgerät in unterschiedlich großen Abstand überführbar ist, so dass das mindestens eine Reinigungsaggregat unterschiedlich weit in den Zwischenraum eingreift. Mindestens ein Reinigungsaggregat, darauf wird nachfolgend noch eingegangen, kann ausrückbar relativ zum Bodenreinigungsgerät im Übrigen sein. Je nach Tiefe des Zwischenraumes kann das Reinigungsaggregat unterschiedlich weit ausgerückt werden, um eine möglichst flächendeckende Reinigung zu gewährleisten.

Bei einer vorteilhaften Ausführungsform ist es günstig, wenn das Bodenreinigungsgerät eine kombinierte Sende- und Detektionseinheit zum Emittieren und Erfassen der Strahlung aufweist. Die die Strahlung aussendende Sendeeinheit kann zugleich zum Erfassen der Strahlung ausgestaltet sein. Beispielsweise kommt ein Laserscanner, insbesondere ein 3D-Laserscanner, zum Einsatz.

Es kann vorgesehen sein, dass die Sendeeinheit eine Ultraschall-Sendeeinheit ist, mit der Ultraschallstrahlung emittierbar ist, und dass die Detektionseinheit eine Ultraschall-Detektionseinheit ist. "Strahlung" ist dementsprechend vorliegend nicht auf elektromagnetische Strahlung beschränkt, umfasst diese aber insbesondere. Ferner umfasst "Strahlung" vorliegend auch Ultraschall, bei dem sich Wellen über die Kompression eines Mediums, insbesondere Luft, ausbreiten können und dessen Beschreibung ähnlichen Gesetzen unterliegt wie elektromagnetische Strahlung (z. B. hinsichtlich Ausbreitungsgeschwindigkeit, Wellenlänge, Frequenz etc.).

Alternativ oder ergänzend kann vorgesehen sein, dass die Sendeeinheit eine optische Sendeeinheit ist, mit der optische und insbesondere Infrarotstrahlung und/oder sichtbare Strahlung emittierbar ist, und dass die Detektionseinheit eine optische Detektionseinheit ist.

Bei einer vorteilhaften Ausführungsform des Bodenreinigungsgerätes umfasst die Sendeeinheit eine Laserlichtquelle, zum Beispiel einen Infrarotlaser oder einen Laser zur Emission sichtbaren Lichts. Laserlichtstrahlung kann von der Sendeeinheit auf das Hindernis und die Bodenfläche projiziert werden. Durch Reflexion kann Laserlichtstrahlung von der Detektionseinheit erfasst werden. In der Praxis erweist es sich als konstruktiv einfach und zuverlässig, eine Laserlichtquelle zum räumlichen Abtasten des Hindernisses und der Bodenfläche einzusetzen.

Bei einer vorteilhaften Umsetzung des Bodenreinigungsgerätes erweist es sich als günstig, wenn die Detektionseinheit eine Digitalkamera ist oder eine solche umfasst, mit der Aufnahmen des Hindernisses und der Bodenfläche erstellbar sind, wobei in den Aufnahmen ein auf die reflektierte Strahlung zurückgehender Anteil ermittelbar ist. Dies erlaubt eine konstruktiv einfache und kostengünstige Herstellung des Bodenreinigungsgerätes. Ein hochpreisiges 3D-Laserscansystem kann eingespart werden, wenn zum Erfassen der Strahlung eine Digitalkamera eingesetzt wird. Üblicherweise umfassen selbstfahrende und selbstlenkende Bodenreinigungsgeräte eine Digitalkamera zum Erkennen von Hindernissen und Bodenflächenbegrenzungen, beispielsweise zur Lokalisierung und/oder zum Erstellen einer Karte. Es kann insbesondere diese Digitalkamera dazu genutzt werden, Aufnahmen des Hindernisses und der Bodenfläche zu erstellen und in diesen Aufnahmen Signalanteile zu ermitteln, die auf die Strahlung der Sendeeinheit zurückgehen. Hierzu kann vorgesehen sein, dass in der Steuereinheit entsprechende Bildverarbeitungsalgorithmen ausführbar gespeichert sind, die die Aufnahmen auf Anteile reflektierter Strahlung untersuchen. Es versteht sich, dass die Digitalkamera so kalibriert ist, dass die Steuereinheit anhand dieser Anteile das Vorhandensein eines Zwischenraumes zwischen dem Hindernis und der Bodenfläche ermitteln kann.

Günstig ist es, wenn die Sendeeinheit so ausgestaltet ist, dass die Strahlung linienförmig emittierbar ist. Ein linienförmiges Signal, beispielsweise einer Laserlichtquelle, kann auf das Hindernis und die Bodenfläche projiziert werden. Ist unterhalb des Hindernisses ein Zwischenraum vorhanden, ist dies beispielsweise durch eine räumliche Unterbrechung oder einen räumlichen Versatz reflektierter Strahlung von der Detektionseinheit erkennbar, weil sich die Strahlung in den Zwischenraum weiter ausbreitet als bis zum Hindernis.

Als vorteilhaft erweist es sich, wenn die Sendeeinheit so ausgestaltet ist, dass die Strahlung fächerförmig emittierbar ist.

Günstigerweise ist die Sendeeinheit so ausgestaltet, dass die Strahlung in zumindest einer Ebene emittierbar ist.

Bevorzugt ist die Sendeeinheit so ausgestaltet, dass die Strahlung in einer vertikalen Ebene emittierbar ist.

Positions- und Orientierungsangaben wie beispielsweise "oberhalb", "unterhalb", "vertikal", "horizontal" oder dergleichen sind vorliegend als auf einen bestimmungsgemäßen Gebrauch des Bodenreinigungsgerätes auf der Bodenfläche bezogen aufzufassen. Das Bodenreinigungsgerät definiert eine Berührebene, die mit einer Ebene der Bodenfläche zusammenfällt, wobei diese als horizontal ausgerichtet angesehen wird. "Längsrichtung" bezieht sich auf eine Hauptbewegungsrichtung des Bodenreinigungsgerätes bei geradliniger Geradeausfahrt.

Bei der zuletzt erwähnten vorteilhaften Ausführungsform kann insbesondere vorgesehen sein, dass die Sendeeinheit so ausgestaltet ist, dass die Strahlung in einer Ebene emittierbar ist, die schräg und insbesondere quer zu einer Längsrichtung des Bodenreinigungsgerätes ausgerichtet ist. Üblicherweise bewegt sich das Bodenreinigungsgerät bei Geradeausfahrt in Längsrichtung. Durch Emission der Strahlung in einer Ebene schräg und insbesondere quer zur Längsrichtung können Hindernisse und die Bodenfläche seitlich neben dem Bodenreinigungsgerät räumlich abgetastet werden.

Alternativ oder ergänzend kann vorgesehen sein, dass Strahlung in einer relativ zur Horizontalen geneigten Ebene in Richtung auf die Bodenfläche emittierbar ist, wobei eine Schnittlinie der Ebene der Emission mit der Horizontalen quer zu einer Längsrichtung des Bodenreinigungsgerätes ausgerichtet ist.

Bei der zuletzt erwähnten vorteilhaften Ausführungsform ist insbesondere vorgesehen, dass die Strahlung bei Geradeausfahrt des Bodenreinigungsgerätes auf einen dem Bodenreinigungsgerät vorgelagerten Bereich ausgerichtet ist. Insbesondere kann die Strahlung in einer schräg nach unten geneigten Ebene auf die Bodenfläche vor dem Bodenreinigungsgerät gerichtet sein. Fährt das Bodenreinigungsgerät auf ein Hindernis zu, wird von der Strahlung zunächst ein Bodenflächenabschnitt unterhalb des Hindernisses erfasst. Bei weiterer Bewegung des Bodenreinigungsgerätes wird die Strahlung auf das Hindernis projiziert. Anhand des sich ergebenden Unterschiedes in der Höhe der reflektierten Strahlung kann von der Steuereinheit auf das Vorhandensein des Bodenflächenabschnittes geschlossen werden.

Die vorstehende Beschreibung umfasst somit vorliegend insbesondere die Information, dass die Sendeeinheit und die Empfangseinheit mittels eines Lichtschnittverfahrens Strahlung emittieren bzw. reflektierte Strahlung erfassen.

Die Sendeeinheit und/oder die Empfangseinheit kann unbeweglich oder beweglich, zum Beispiel verschieblich und/oder schwenkbar, am Bodenreinigungsgerät gehalten sein.

Es wurde bereits erwähnt, dass vorteilhafterweise während einer die Bodenfläche reinigenden Bewegung des Bodenreinigungsgerätes Strahlung emittierbar, erfassbar und das Vorhandensein des Zwischenraumes ermittelbar ist.

Das Bodenreinigungsgerät kann eine Mehrzahl von Reinigungsaggregaten aufweisen. Beispiele für Reinigungsaggregate sind ein Tellerbesen, eine Kehrwalze, eine Schrubbwalze, ein Bodenreinigungskopf mit einer Mehrzahl von Schrubbwalzen, eine Tellerbürste, eine Saugdüse oder eine Schmutzaufnahmevorrichtung, etwa in Gestalt einer Saugleiste.

Als vorteilhaft erweist es sich bei einer Umsetzung des Bodenreinigungsgerätes, wenn als Reinigungsaggregat zumindest ein Tellerbesen mit Reinigungsborsten vorgesehen ist und/oder eine Schmutzaufnahmevorrichtung, welche Reinigungsborsten bzw. welche Schmutzaufnahmevorrichtung zum Eingreifen in den Zwischenraum zumindest teilweise über eine Außenkontur des Bodenreinigungsgerätes hervorragen. Dadurch können die Reinigungsborsten bzw. die Schmutzaufnahmevorrichtung in den Zwischenraum eingreifen, selbst wenn das Bodenreinigungsgerät einen Abstand zum Hindernis aufweist. Die Außenkontur wird zum Beispiel über ein Gehäuse des Bodenreinigungsgerätes definiert.

Günstig ist es, wenn mindestens ein Reinigungsaggregat beweglich am Bodenreinigungsgerät gehalten ist und gegenüber einem Gehäuse des Bodenreinigungsgerätes zum Eingreifen in den Zwischenraum ausrückbar ist. Dies gibt insbesondere die Möglichkeit, das ausrückbare Reinigungsaggregat von einer gehäusenahen Stellung in eine gehäuseferne Stellung, bezogen auf ein die Außenkontur des Bodenreinigungsgerätes definierendes Gehäuse, und umgekehrt zu überführen. In der gehäusenahen Stellung kann vorgesehen sein, dass das Reinigungsaggregat nicht oder nur teilweise über die Außenkontur hervorragt. In der gehäusefernen Stellung kann das Reinigungsaggregat in größerem Ausmaß über die Außenkontur hervorragen als in der gehäusenahen Stellung. Das Reinigungsaggregat kann ausgerückt werden und dadurch möglichst tief in den Zwischenraum eingreifen, um eine möglichst flächendeckende Reinigung zu erzielen.

Das mindestens eine Reinigungsaggregat ist am Bodenreinigungsgerät zum Ausrücken beispielsweise verschieblich und/oder schwenkbar gelagert.

Es kann vorgesehen sein, dass ein insbesondere ausrückbares Reinigungsaggregat (beispielsweise in Gestalt eines Seitenbesens) entgegen der Wirkung eines elastischen Elementes beweglich am Bodenreinigungsgerät gelagert ist. Beispielsweise kann das Reinigungsaggregat bei Kollision mit dem Hindernis entgegen der Wirkung federnd verschwenkt werden, um eine Beschädigung zu vermeiden. Dies ist zum Beispiel dann von Vorteil, wenn das Reinigungsaggregat in den Zwischenraum eingreift, um den Bodenflächenabschnitt zu reinigen und das Hindernis an einem die Bodenfläche kontaktierenden Abschnitt kontaktiert. Beispielsweise handelt es sich hierbei um einen Regalfuß oder einen Regalsockel, bei Kollision mit dem das Reinigungsaggregat verschwenkt wird.

Vorteilhafterweise weist das Bodenreinigungsgerät eine mit der Steuereinheit gekoppelte Antriebseinheit auf zum Ausrücken des mindestens einen Reinigungsaggregates relativ zum Bodenreinigungsgerät. Insbesondere kann die Steuereinheit bei Positionieren des Bodenreinigungsgerätes am Hindernis die Antriebseinheit aktivieren, um das Reinigungsaggregat auszurücken, so dass dieses in oder tiefer in den Zwischenraum eingreift. Nach Reinigung des Bodenflächenabschnittes kann die Antriebseinheit erneut aktiviert werden, um das Reinigungsaggregat einzurücken.

Das Bodenreinigungsgerät ist beispielsweise eine Scheuersaugmaschine, eine Kehrsaugmaschine, eine Kehrscheuersaugmaschine oder eine Saugmaschine.

Wie eingangs erwähnt, betrifft die Erfindung auch ein Verfahren. Die eingangs genannte Aufgabe wird durch ein erfindungsgemäßes Verfahren zum Reinigen einer Bodenfläche eines Raumes mit einem selbstfahrenden und selbstlenkenden Bodenreinigungsgerät der vorstehend genannten Art gelöst, wobei ein innerhalb des Raumes angeordnetes Hindernis zumindest abschnittsweise frei von Kontakt mit der Bodenfläche ist, wobei Strahlung in Richtung des Hindernisses und der Bodenfläche emittiert um diese räumlich abzutasten, reflektierte Strahlung detektiert und ein diesbezügliches Detektionssignal bereitgestellt wird, ermittelt wird, ob zwischen dem Hindernis und der Bodenfläche ein Zwischenraum vorhanden ist und bejahendenfalls ein unterhalb des Hindernisses angeordneter Bodenflächenabschnitt als reinigbar angesehen und gereinigt wird, wobei mindestens ein Reinigungsaggregat des Bodenreinigungsgerätes in den Zwischenraum eingreift.

Die bereits im Zusammenhang mit der Erläuterung des erfindungsgemäßen Bodenreinigungsgerätes erwähnten Vorteile können bei Durchführung des erfindungsgemäßen Verfahrens ebenfalls erzielt werden. Diesbezüglich wird auf voranstehende Erläuterungen verwiesen.

Selbstverständlich können die Merkmale vorteilhafter Ausführungsformen des Bodenreinigungsgerätes auch zur Definition vorteilhafter Ausführungsbeispiele des erfindungsgemäßen Verfahrens herangezogen werden. Die Merkmale des Gerätes können dementsprechend verfahrensmäßig umgesetzt sein. Auch diesbezüglich wird zur Vermeidung von Wiederholungen auf voranstehende Ausführungen verwiesen.

Die nachfolgende Erläuterung vorteilhafter Ausführungsformen der Erfindung dient im Zusammenhang mit der Zeichnung der näheren Erläuterung der Erfindung. Es zeigen:
- Figur 1:: eine schematische Draufsicht auf ein erfindungsgemäßes Bodenreinigungsgerät, das auf einer Bodenfläche positioniert ist und ein Hindernis abtastet;
- Figur 2:: eine schematische Darstellung in Blickrichtung des Pfeiles "2" in Figur 1;
- Figur 3:: ein schematisches Blockdiagramm des Bodenreinigungsgerätes aus Figur 1;
- Figur 4:: das Bodenreinigungsgerät aus Figur 1 bei einer Reinigung eines unterhalb des Hindernisses angeordneten Bodenflächenabschnittes;
- Figur 5:: eine Teildarstellung einer in einer Speichereinheit des Bodenreinigungsgerätes aus Figur 1 gespeicherten Karte des die Bodenfläche aufweisenden Raumes;
- Figur 6:: eine zweite vorteilhafte Ausführungsform eines erfindungsgemäßen Bodenreinigungsgerätes in schematischer Seitenansicht und auf ein Hindernis zufahrend; und
- Figur 7:: das Bodenreinigungsgerät aus Figur 6 zu einem späteren Zeitpunkt in geringerem Abstand zum Hindernis.

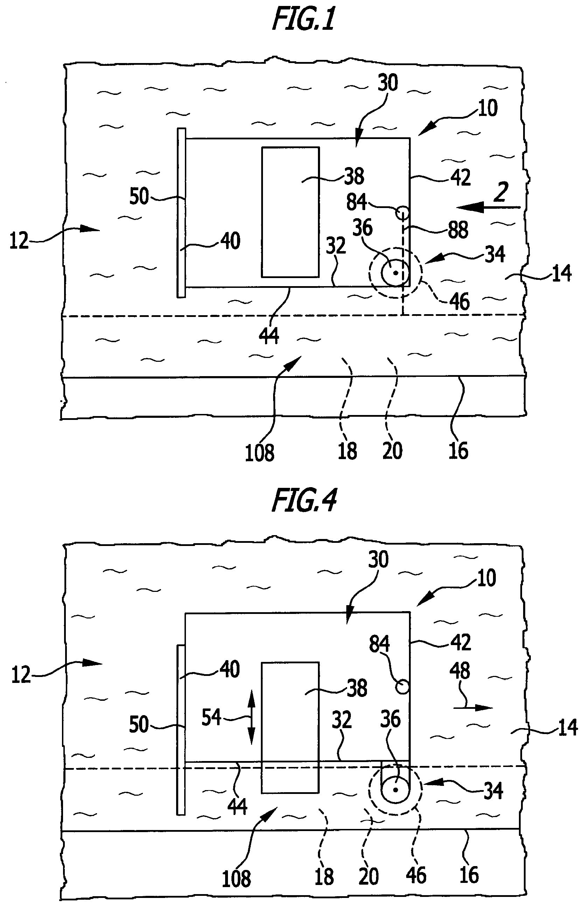

Die Figuren 1 bis 4 zeigen eine vorteilhafte Ausführungsform eines mit dem Bezugszeichen 10 belegten Bodenreinigungsgerätes. Das Bodenreinigungsgerät 10 ist selbstfahrend und selbstlenkend ausgestaltet und dementsprechend ein sogenannter Reinigungsroboter, um eine autonome Reinigung einer Bodenfläche durchzuführen. Vorliegend ist das Bodenreinigungsgerät 10 als Scheuersaugmaschine ausgestaltet.

Das Bodenreinigungsgerät 10 ist in einem Raum 12 positioniert, der eine Bodenfläche 14 aufweist. Ferner ist eine seitliche Begrenzung des Raumes 12 in Gestalt einer Seitenwand 16 dargestellt. An der Seitenwand 16 ist ein innerhalb des Raumes 12 angeordnetes Hindernis 18 gehalten. Bei dem Hindernis 18 handelt es sich vorliegend beispielsweise um ein Wandregal 20. Das Wandregal 20 ist frei von Kontakt mit der Bodenfläche 14. Es steht also nicht über Regalfüße oder einem Sockel auf der Bodenfläche 14 auf. Dies ist für die Definition, das Verständnis und die Ausführung der vorliegenden Erfindung jedoch nicht zwingend erforderlich, sondern dient lediglich der einfacheren Erläuterung der Erfindung.

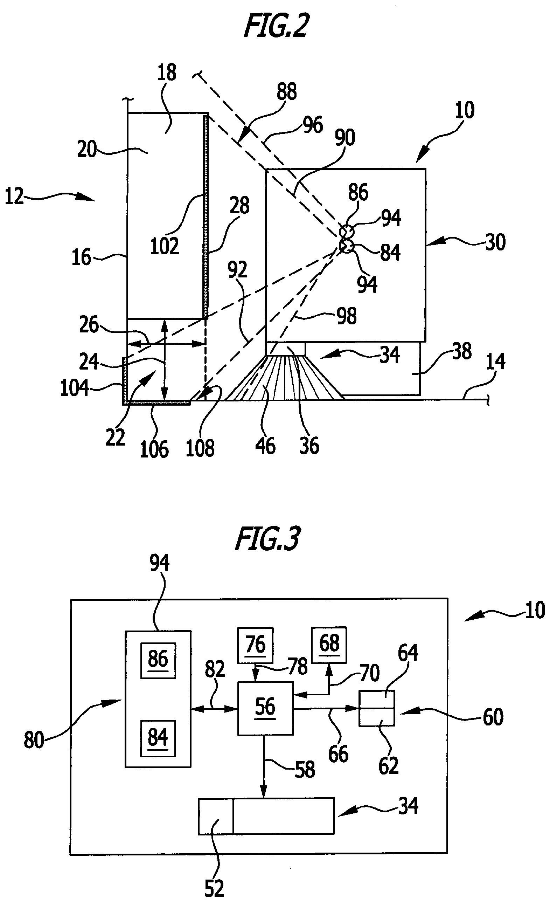

Unterhalb des Wandregals 20 ist ein Zwischenraum 22 vorhanden, dessen Höhe durch einen Doppelpfeil 24 symbolisiert wird (Figur 2). Unter der Höhe 24 wird vorliegend insbesondere der Abstand des Wandregales 20 von der Bodenfläche 14 verstanden.

Der Zwischenraum 22 weist eine durch einen Doppelpfeil 26 symbolisierte Erstreckung auf. Die Erstreckung 26 wird nachfolgend als "Tiefe" 26 des Zwischenraumes 22 bezeichnet. Im vorliegenden Fall ist die Tiefe 26 vorgegeben durch den Abstand einer Frontseite 28 des Wandregals 20 von der Seitenwand 16. In den Figuren 1 und 4 symbolisiert eine parallel zur Seitenwand 16 verlaufende gestrichelte Linie den Verlauf der Frontseite 28.

Das Bodenreinigungsgerät 10 umfasst ein Gehäuse 30, das eine Außenkontur 32 des Bodenreinigungsgerätes 10 definiert. An einer Unterseite des Gehäuses 30 ist eine Reinigungseinrichtung 34 gehalten. Die Reinigungseinrichtung 34 umfasst mindestens ein Reinigungsaggregat. Vorliegend sind Reinigungsaggregate in Gestalt eines Tellerbesens 36, eines Bodenreinigungskopfes 38 und einer Schmutzaufnahmevorrichtung 40 vorgesehen. Der Tellerbesen 36 ist an einer Vorderseite 42 des Bodenreinigungsgerätes und an einer rechten Seite 44 desselben positioniert und weist schräg bezüglich einer Vertikalen ausgerichtete Reinigungsborsten 46 auf.

Positions- und Orientierungsangaben beziehen sich, wie erwähnt, auf einen bestimmungsgemäßen Gebrauch des Bodenreinigungsgerätes 10 auf einer als horizontal angesehenen Bodenfläche 14 und auf eine Längsrichtung 48. Die Längsrichtung 48 entspricht einer Hauptbewegungsrichtung des Bodenreinigungsgerätes 10 bei geradliniger Geradeausfahrt.

Der Bodenreinigungskopf 38 ist in Längsrichtung 48 beispielsweise mittig am Bodenreinigungsgerät 10 angeordnet. Er umfasst beispielsweise mindestens eine Schrubbwalze, die um eine Achse quer zur Längsrichtung 48 rotierbar ist. Über den Bodenreinigungskopf 38 kann die Bodenfläche 14 auch mit einer Reinigungsflüssigkeit wie zum Beispiel Wasser beaufschlagt werden.

An einer Rückseite 50 des Bodenreinigungsgerätes 10 ist die Schmutzaufnahmevorrichtung 40 angeordnet, ausgestaltet als Saugleiste. Über die Saugleiste kann das Gemisch aus Reinigungsflüssigkeit und Schmutz von der Bodenfläche 14 unter der Wirkung eines in der Zeichnung nicht dargestellten Saugaggregates aufgenommen werden.

Der Tellerbesen 36 ist so am Gehäuse gehalten, dass die Reinigungsborsten 46 bereichsweise über die Außenkontur 32 an der rechten Seite hinausragen.

Figur 3 zeigt ein schematisches Blockdiagramm des Bodenreinigungsgerätes 10, in dem die Reinigungseinrichtung 34 als Ganzes dargestellt ist. Als Bestandteil der Reinigungseinrichtung 34 ist auch eine Antriebseinheit 52 dargestellt. Über die Antriebseinheit 52 kann mindestens ein Reinigungsaggregat relativ zum Gehäuse 30 ausgerückt werden. Insbesondere ist das ausrückbare Reinigungsaggregat am Gehäuse 30 verschiebbar quer zur Längsrichtung 48 gelagert. Alternativ oder ergänzend kann eine schwenkbare Lagerung des Reinigungsaggregates vorgesehen sein. Es kann bei einer Mehrzahl von Reinigungsaggregaten eine schwenkbare Lagerung eines Reinigungsaggregates und eine verschiebbare Lagerung eines weiteren Reinigungsaggregates vorgesehen sein.

Im vorliegenden nicht einschränkenden Beispiel sind sowohl der Tellerbesen 36 als auch der Bodenreinigungskopf 38 und die Schmutzaufnahmevorrichtung 40 quer zur Längsrichtung 48 ausrückbar. Sie können von einer gehäusenahen Stellung in eine gehäuseferne Stellung überführt werden, wobei sie in der gehäusefernen Stellung über die Außenkontur 32 in größerem Umfang hinausragen als in der gehäusenahen Stellung. In Bezug auf die Schmutzaufnahmevorrichtung 40 wird darunter vorliegend verstanden, dass diese in größerem Abstand zum Gehäuse 30 angeordnet ist und quer zur Längsrichtung weiter über dieses hervorragt, als wenn sie die gehäusenahe Stellung einnimmt.

Figur 4 zeigt die Reinigungsaggregate in einer ausgerückten Stellung und symbolisiert anhand eines Doppelpfeils 54 deren Verschiebung relativ zum Gehäuse 30.

Das Bodenreinigungsgerät 10 weist eine Steuereinheit 56 auf, die über eine Steuerleitung 58 mit der Reinigungseinrichtung 34 gekoppelt ist, um die Antriebseinheit 52 anzusteuern. Die Steuereinheit 56 umfasst beispielsweise einen Mikroprozessor. In der Steuereinheit 56 sind beispielsweise Computerprogramme ausführbar gespeichert.

Das Bodenreinigungsgerät 10 umfasst ferner ein nur in Figur 3 schematisch dargestelltes Fahrwerk 60 mit Antriebsrädern beziehungsweise mindestens einer Lenkrolle 62 und einer Antriebseinheit 64. Die Antriebseinheit 64 ist von der Steuereinheit 56 über eine Steuerleitung 66 ansteuerbar. Dies erlaubt es, das Bodenreinigungsgerät 10 wie gewünscht über die Bodenfläche 14 zu verfahren.

Das Bodenreinigungsgerät 10 umfasst ferner eine Speichereinheit 68, die mit der Steuereinheit 56 über eine bidirektionale Leitung 70 gekoppelt ist. Die Speichereinheit 68 könnte auch in die Steuereinheit 56 integriert sein. In der Speichereinheit 68 ist insbesondere eine Karte 72 des Raumes 12 und damit der Bodenfläche 14 gespeichert. Insbesondere ist die Karte 72 veränderbar in der Speichereinheit 68 gespeichert. Merkmale des Raumes 12 sind in der Karte 72 mit identischen Bezugszeichen versehen. Dementsprechend weist die Karte 72 auch die Bodenfläche 14 auf und die Seitenwand 16. Es ist ferner eine weitere Seitenwand 74 des Raumes 12 gezeigt.

Das Bodenreinigungsgerät 10 umfasst ferner eine Lokalisierungseinheit 76, die über eine Signalleitung mit der Steuereinheit 56 gekoppelt ist. Die Lokalisierungseinheit 76 könnte auch in die Steuereinheit 56 integriert sein.

Über die Lokalisierungseinheit 76 kann die Steuereinheit 56 die Position des Bodenreinigungsgerätes 10 im Raum 12 anhand der Karte 72 ermitteln.

Ferner umfasst das Bodenreinigungsgerät 10 eine Sensoreinheit 80. Die Sensoreinheit 80 ist über eine bidirektionale Leitung 82 mit der Steuereinheit 56 gekoppelt. Die Sensoreinheit 80 umfasst eine Sendeeinheit 84 und eine Detektionseinheit 86 und bildet insbesondere ein 3D-Messsystem.

Die Sendeeinheit 84 ist vorliegend zur Emission von Strahlung ausgestaltet, insbesondere optischer Strahlung, speziell Infrarotlicht und/oder sichtbarem Licht. Zu diesem Zweck weist die Sendeeinheit 84 beispielsweise eine Laserlichtquelle auf. Die Sendeeinheit 84 ist vorliegend an der Vorderseite 42 am Gehäuse 30 gehalten, könnte jedoch auch an anderer Stelle des Bodenreinigungsgerätes 10 positioniert sein.

Die Sendeeinheit 84 ist so ausgestaltet, dass Strahlung in einer Ebene 88 linienförmig emittierbar ist. Figur 1 symbolisiert die Ebene 88 anhand gestrichelter Linien. Die Ebene 88 ist vorliegend quer zur Längsrichtung 48 ausgerichtet. Die Strahlung wird von der Sendeeinheit 84 dementsprechend in Querrichtung des Bodenreinigungsgerätes 10 emittiert. Die Sendeeinheit 84 ist dabei so ausgestaltet, dass die Strahlung in einer vertikalen Ebene 88 emittiert wird. Die Emission der Strahlung erfolgt beispielsweise fächerförmig. Figur 2 zeigt durch gestrichelte Linien symbolisierte Ränder 90, 92 des Emissionsfeldes. Der Öffnungswinkel beträgt vorliegend ungefähr 90°, könnte jedoch auch unterschiedlich sein.

Die Detektionseinheit 86 ist vorliegend ausgestaltet als Digitalkamera 94. Die Digitalkamera 94 ist an der Vorderseite 42 am Gehäuse 30 gehalten, sie könnte jedoch auch an anderer Position am Bodenreinigungsgerät 10 angeordnet sein. Mit der Digitalkamera 94 können Aufnahmen des Raumes 12 erstellt werden, beispielsweise zur Navigation des Bodenreinigungsgerätes und zum Erstellen der Karte 72. Anhand gestrichelter, mit dem Bezugszeichen 96, 98 symbolisierten Linien ist schematisch das Sichtfeld der Digitalkamera 94 dargestellt. Das Sichtfeld ist insbesondere quer zur Längsrichtung 48 gerichtet, in Emissionsrichtung der Strahlung von der Sendeeinheit 84. Vorzugsweise ist das Sichtfeld der Digitalkamera 94 so groß, dass die von der Sendeeinheit 84 in den Raum 12 ausgesandte Strahlung, umfassend eine Projektion von Laserlicht auf sich im Raum 12 befindenden Gegenstände und die Bodenfläche 14, vollständig erfasst werden kann.

Nachfolgend wird unter Verweis insbesondere auf die Figuren 1, 2 und 4 auf die Funktionsweise des Bodenreinigungsgerätes 10 und ein vorteilhaftes Ausführungsbeispiel eines erfindungsgemäßen Verfahrens eingegangen.

Während der Bewegung des Bodenreinigungsgerätes 10 über die Bodenfläche 14, reinigend oder nicht reinigend, emittiert die Sendeeinheit 84 quer zur Längsrichtung 48 Strahlung in den Raum 12. Die Strahlung ist auf Hindernisse wie das Hindernis 18 in Gestalt des Wandregals 20 und die Bodenfläche 14 gerichtet. Auf von der Strahlung erfasste Gegenstände wird dementsprechend ein linienförmiges Lichtsignal projiziert, so dass diese räumlich abgetastet werden.

Figur 2 stellt dies beispielhaft anhand einer Projektionslinie 102 am Wandregal 20 dar. Die Projektionslinie 102 ist durch eine erhöhte Strichstärke hervorgehoben. Weiter ist in Figur 2 eine Projektionslinie 104 an der Seitenwand 16 durch erhöhte Strichstärke hervorgehoben. Eine Projektionslinie 106 auf der Bodenfläche 14 unterhalb des Wandregals 20 ist durch erhöhte Strichstärke hervorgehoben. Oberhalb der Projektionslinie 104 trifft keine Strahlung auf die Seitenwand 16, weil die Seitenwand 16 in diesem Bereich durch das Wandregal 20 abgeschattet wird.

Trifft die Strahlung auf einen Gegenstand, wird sie reflektiert. Unter Reflexion wird vorliegend nicht nur eine Retroreflexion verstanden, sondern insbesondere auch eine Streuung der Strahlung.

Die reflektierte Strahlung kann von der Digitalkamera 94 erfasst werden. Die Digitalkamera 94 erstellt in vorzugsweise regelmäßen Abständen Aufnahmen des Raumes 12. Dabei werden Aufnahmen im vorliegenden Fall des Wandregals 20 und abschnittsweise der Bodenfläche 14 erstellt. Die Aufnahmen werden der Steuereinheit 56 als Detektionssignal übermittelt. Mittels in der Steuereinheit 56 ausführbar gespeicherter Bildverarbeitungsalgorithmen können in den Aufnahmen auf die reflektierte Strahlung zurückgehende Anteile ermittelt werden.

Anhand der auf die Strahlung zurückgehenden Anteile kann die Steuereinheit 56 die Lage der Projektionslinien 102, 104, 106 relativ zum Bodenreinigungsgerät 10 ermitteln. Dies erlaubt es insbesondere, die Lagen der Projektionslinien 102, 104, 106 im Raum zu ermitteln.

Die Steuereinheit 56 kann dadurch feststellen, dass unterhalb des Wandregals 20 der Zwischenraum 22 vorhanden ist. Die Höhe 24 des Zwischenraumes kann bestimmt werden. Ferner ist es möglich, die Tiefe 26 des Zwischenraumes 22 zu bestimmen. Die Tiefe des Zwischenraumes kann in Ausbreitungsrichtung der Strahlung ermittelt werden und stimmt im vorliegenden Beispiel mit der Tiefe 26 überein.

Die Steuereinheit 56 kann dadurch feststellen, dass unterhalb des Wandregals 20 ein Bodenflächenabschnitt 108 vorhanden ist, der gereinigt werden kann. Sofern die Höhe 24 größer ist als eine Mindesthöhe, die das Eingreifen mindestens eines Reinigungsaggregates in den Zwischenraum 22 erlaubt, wird der Bodenflächenabschnitt 108 als reinigbar angesehen und vom Bodenreinigungsgerät 10 gereinigt.

Der Bodenflächenabschnitt 108 kann in der Karte 72 als reinigbar gekennzeichnet werden. In der Karte 72 wird der Bodenflächenabschnitt 108 durch eine strichlinierte Kontur 110 gekennzeichnet. Zusätzlich kann die Information in der Karte gespeichert sein, dass sich dieser Bodenflächenabschnitt 108 unterhalb eines Hindernisses 18 befindet. Für nachfolgende Reinigungen der Bodenfläche 14 kann diese Information herangezogen werden, um den Bodenflächenabschnitt 108 gezielt anzufahren und zu reinigen.

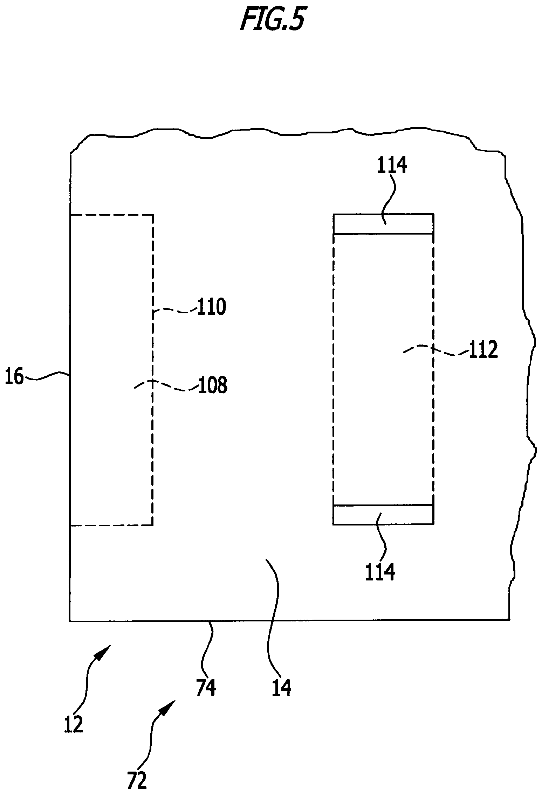

Figur 5 symbolisiert ferner einen Bodenflächenabschnitt 112, der ebenfalls als unterhalb eines Hindernisses angeordnet und als reinigbar in der Karte 72 gespeichert ist. Der Bodenflächenabschnitt 112 ist ebenfalls durch strichlinierte Kennzeichnung dargestellt. Beispielsweise ist der Bodenflächenabschnitt 112 unterhalb eines Hindernisses wie eines Standregales angeordnet. Das Standregal weist beispielsweise Regalfüße auf, die die Bodenfläche 14 kontaktieren. Die Standfüße werden in der Karte 72 dementsprechend (mit Bezugszeichen 114) als Bereiche gekennzeichnet, in denen die Bodenfläche 14 nicht gereinigt werden kann.

Zum Reinigen des Bodenflächenabschnittes 108 kann die Steuereinheit 56 das Fahrwerk 60 so ansteuern, dass das Bodenreinigungsgerät 10 vorzugsweise parallel zum Wandregal 20 verfahren wird. Das Bodenreinigungsgerät 10 kann so nah am Wandregal 20 positioniert werden, dass die Reinigungsborsten 46 in den Zwischenraum 22 eingreifen, um den Bodenflächenabschnitt 108 zumindest abschnittsweise zu reinigen (dies ist in der Zeichnung nicht dargestellt).

Von Vorteil ist es jedoch, wenn zumindest ein Reinigungsaggregat relativ zum Gehäuse 30, wie vorstehend erläutert, ausgerückt wird. Dies ist in Figur 4 gezeigt, in der das Bodenreinigungsgerät 10 möglichst nah am Wandregal 20 positioniert ist, ohne dieses zu kontaktieren. Unter Ansteuerung der Antriebseinheit 52 werden im vorliegenden Beispiel der Tellerbesen 36, der Bodenreinigungskopf 38 und die Schmutzaufnahmevorrichtung 40 in Querrichtung 54 relativ zum Gehäuse 30 verschoben, so dass sie in den Zwischenraum 22 eingreifen. Dies erlaubt es, den Bodenflächenabschnitt 108 mit dem Tellerbesen 36 abzukehren, mit dem Bodenreinigungskopf 38 unter Zuhilfenahme von Reinigungsflüssigkeit zu schrubben, und das Gemisch aus Schmutz und Reinigungsflüssigkeit mit der Schmutzaufnahmevorrichtung 40 aufzunehmen.

Nach der Reinigung des Bodenflächenabschnitts 108 können die Reinigungsaggregate wieder von der gehäusefernen in die gehäusenahe Stellung verschoben werden.

Es ist sogar möglich, die Eingriffstiefe des jeweils ausgerückten Reinigungsaggregates abhängig von der ermittelten Tiefe 26 des Bodenflächenabschnittes 108 zu wählen. Die Steuereinheit 56 kann dabei die Antriebseinheit so ansteuern, dass das jeweilige Reinigungsaggregat nur teilweise oder vollumfänglich verschoben wird, um vollständig oder möglichst weit in den Zwischenraum 22 einzugreifen, oder nur so weit, dass kein Reinigungsaggregat einen den Zwischenraum 22 begrenzenden Gegenstand kontaktiert, im vorliegenden Fall zum Beispiel die Seitenwand 16.

Unter Einsatz des erfindungsgemäßen Bodenreinigungsgerätes 10 und der Durchführung des erfindungsgemäßen Verfahrens kann eine umfassendere, flächendeckendere Reinigung der Bodenfläche 14 erzielt werden.

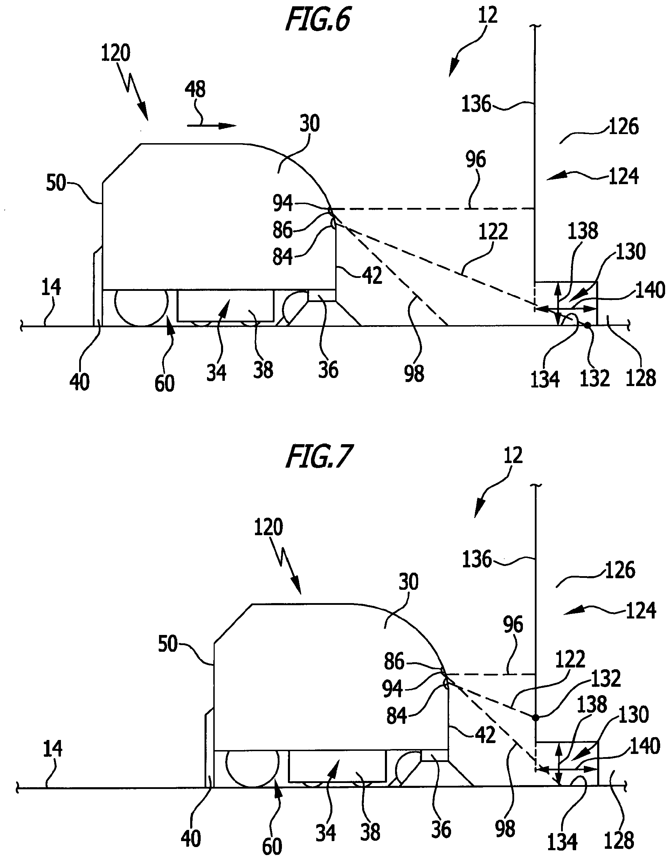

Nachfolgend wird auf ein in den Figuren 6 und 7 dargestelltes weiteres erfindungsgemäßes Bodenreinigungsgerät 120 eingegangen. Für gleiche oder gleichwirkende Merkmale oder Bauteile der Bodenreinigungsgeräte 10 und 120 werden identische Bezugszeichen benutzt. Die mit dem Bodenreinigungsgerät 10 erzielbaren Vorteile können auch mit dem Bodenreinigungsgerät 120 erzielt werden. Auch mit dem Bodenreinigungsgerät 120 kann ein erfindungsgemäßes Verfahren ausgeführt werden. Nachfolgend wird nur auf die wesentlichen Unterschiede eingegangen.

Beim Bodenreinigungsgerät 120 wird die von der Sendeeinheit 84 emittierte Strahlung in einer Ebene 122 emittiert. Die Ebene 122 ist relativ zur Horizontalen geneigt und auf die Bodenfläche 14 gerichtet. Eine Schnittlinie der Ebene 122 mit der Horizontalen ist quer zur Längsrichtung 48 ausgerichtet (in den Figuren 6 und 7 senkrecht zur Zeichenebene). Die Strahlung ist bei Geradeausfahrt des Bodenreinigungsgerätes auf einen diesem vorgelagerten Bereich gerichtet.

Als Hindernis 124 ist in den Figuren 6 und 7 beispielsweise ein Standregal 126 mit einem Regalsockel 128 dargestellt. Über den Regalsockel 128 kontaktiert das Standregal 126 die Bodenfläche 14. Abschnittsweise ist unterhalb des Standregals 126 ein Zwischenraum 130 vorhanden.

Das Vorhandensein des Zwischenraumes 130 kann beim Bodenreinigungsgerät 120 beispielsweise folgendermaßen erfasst werden. Das Bodenreinigungsgerät 120 bewegt sich auf das Standregal 126 zu. Eine Projektionslinie 132 des Laserlichtes liegt auf der Bodenfläche 14, wenn der Abstand des Bodenreinigungsgerätes 120 vom Standregal 126 hinreichend groß ist.

Reflektierte Strahlung wird auch beim Bodenreinigungsgerät 120 mittels der Analyse von Aufnahmen der Digitalkamera 94 durch die Steuereinheit 56 ermittelt. Die Digitalkamera 94 ist beim Bodenreinigungsgerät 120 mit dem Sichtfeld ebenfalls nach vorne gerichtet.

Verringert sich der Abstand des Bodenreinigungsgerätes 120 zum Standregal 126, wandert die Projektionslinie 132 auf der Bodenfläche 14 bis in einen unterhalb des Standregals 126 dargestellten Bodenflächenabschnitt 134 (dies ist in Figur 6 gezeigt). Bei weiterer Annäherung des Bodenreinigungsgerätes 120 wird die Strahlung vom Standregal 126 abgeschattet und kann nicht mehr bis zur Bodenfläche 14 gelangen. Dementsprechend liegt die Projektionslinie 132 an einer Frontseite 136 des Standregals 126 (Figur 7).

Die Steuereinheit 56 kann aufgrund der unterschiedlichen Lage der Projektionslinie 132 und unter Berücksichtigung der Bewegung des Bodenreinigungsgerätes 120 die Relativposition des Standregals 126 und des Bodenreinigungsgerätes 120 ermitteln. Dies erlaubt es auch, das Vorhandensein des Zwischenraumes 130 unterhalb des Standregals 126 festzustellen. Wie in dem vorangegangenen Beispiel kann auch eine Höhe 138 und eine Tiefe 140 des Zwischenraums 130 ermittelt werden. Es wird auch das Vorhandensein des Bodenflächenabschnittes 134 festgestellt, der beispielsweise auf eine der voranstehenden Weisen mit mindestens einem Reinigungsaggregat gereinigt werden kann.

## Patentansprüche

1. Selbstfahrendes und selbstlenkendes Bodenreinigungsgerät, das eine Reinigungseinrichtung (34) mit mindestens einem Reinigungsaggregat (36, 38, 40) zum Reinigen einer Bodenfläche (14) eines Raumes (12) umfasst, wobei ein innerhalb des Raumes (12) angeordnetes Hindernis (18, 124) zumindest abschnittsweise frei von Kontakt mit der Bodenfläche (14) ist, wobei das Bodenreinigungsgerät (10; 120) ferner eine Sendeeinheit (84) umfasst zur Emission von auf das Hindernis (18, 124) und die Bodenfläche (14) gerichteter Strahlung, um diese räumlich abzutasten, eine Detektionseinheit (86) zum Erfassen reflektierter Strahlung und Bereitstellen eines diesbezüglichen Detektionssignals, eine mit der Detektionseinheit (86) gekoppelte Steuereinheit (56) sowie ein Fahrwerk (60) zum Verfahren auf der Bodenfläche (14), das eine mit der Steuereinheit (56) gekoppelte Antriebseinheit (64) aufweist, wobei von der Steuereinheit (56) anhand des Detektionssignals ermittelbar ist, ob zwischen dem Hindernis (18, 124) und der Bodenfläche (14) ein Zwischenraum (22, 130) vorhanden ist, ein unterhalb des Hindernisses (18, 124) angeordneter Bodenflächenabschnitt (108, 134) bejahendenfalls als reinigbar angesehen wird und die Antriebseinheit (64) ansteuerbar ist, das Bodenreinigungsgerät (10; 120) zum Reinigen des Bodenflächenabschnittes (108, 134) zu verfahren, wobei mindestens ein Reinigungsaggregat (36, 38, 40) in den Zwischenraum (22, 130) eingreift, **dadurch gekennzeichnet, dass** die Antriebseinheit (64) ansteuerbar ist, das Bodenreinigungsgerät (10; 120) während der Reinigung des Bodenflächenabschnittes (108, 134) in vorgegebenem oder vorgebbarem Abstand zum Hindernis (18, 124) zu verfahren, insbesondere parallel zum Hindernis (18, 124).

2. Bodenreinigungsgerät nach Anspruch 1, **dadurch gekennzeichnet, dass** von der Steuereinheit (56) die Relativposition des Bodenreinigungsgerätes (10; 120) und des Bodenflächenabschnittes (108, 134) ermittelbar ist.

3. Bodenreinigungsgerät nach Anspruch 1 oder 2, **dadurch gekennzeichnet, dass** das Bodenreinigungsgerät (10; 120) eine Speichereinheit (68) umfasst, in der eine Karte (72) des Raumes (12) speicherbar ist, und eine Lokalisierungseinheit (76) zum Lokalisieren der Position des Bodenreinigungsgerätes (10; 120) auf der Bodenfläche (14), und dass die Position des Bodenflächenabschnittes (108, 134) auf der Bodenfläche (14) ermittelbar und der Bodenflächenabschnitt (108, 134) in der Karte (72) als reinigbar und vorzugsweise als unterhalb des Hindernisses (18, 124) positioniert kennzeichenbar ist.

4. Bodenreinigungsgerät nach einem der voranstehenden Ansprüche, **dadurch gekennzeichnet, dass** von der Steuereinheit (56) die Erstreckung (26, 140) des Bodenflächenabschnittes (108, 134) unterhalb des Hindernisses (18, 124) in Ausbreitungsrichtung der Strahlung ermittelbar ist, vorzugsweise dass abhängig von der ermittelten Erstreckung (26, 140) das Bodenreinigungsgerät (10; 120) so relativ zum Hindernis (18, 124) verfahrbar ist, dass das mindestens eine Reinigungsaggregat (36, 38, 40) unterschiedlich weit in den Zwischenraum (22, 130) eingreift und/oder dass mindestens ein Reinigungsaggregat (36, 38, 40) abhängig von der ermittelten Erstreckung (26, 140) relativ zum Bodenreinigungsgerät (10; 120) in unterschiedlich großen Abstand überführbar ist, so dass das mindestens eine Reinigungsaggregat (36, 38, 40) unterschiedlich weit in den Zwischenraum (22, 130) eingreift.

5. Bodenreinigungsgerät nach einem der voranstehenden Ansprüche, **dadurch gekennzeichnet, dass** das Bodenreinigungsgerät (10; 120) eine kombinierte Sende- und Detektionseinheit zum Emittieren und Erfassen der Strahlung aufweist.

6. Bodenreinigungsgerät nach einem der voranstehenden Ansprüche, **dadurch gekennzeichnet, dass** für die Sendeeinheit (84) und die Detektionseinheit (86) zumindest eines der Folgenden gilt:
- die Sendeeinheit (84) ist eine Ultraschall-Sendeeinheit (84), mit der Ultraschallstrahlung emittierbar ist, und die Detektionseinheit ist eine Ultraschall-Detektionseinheit;
- die Sendeeinheit (84) ist eine optische Sendeeinheit (84), mit der optische und insbesondere Infrarotstrahlung und/oder sichtbare Strahlung emittierbar ist, und die Detektionseinheit (86) ist eine optische Detektionseinheit (86).

7. Bodenreinigungsgerät nach einem der voranstehenden Ansprüche, **dadurch gekennzeichnet, dass** die Sendeeinheit (84) eine Laserlichtquelle umfasst und/oder dass die Detektionseinheit (86) eine Digitalkamera (94) ist oder eine solche umfasst, mit der Aufnahmen des Hindernisses (18, 124) und der Bodenfläche (14) erstellbar sind, wobei in den Aufnahmen ein auf die reflektierte Strahlung zurückgehender Anteil ermittelbar ist.

8. Bodenreinigungsgerät nach einem der voranstehenden Ansprüche, **dadurch gekennzeichnet, dass** die Sendeeinheit (84) gemäß zumindest einem der Folgenden ausgestaltet ist:
- die Sendeeinheit (84) ist so ausgestaltet, dass die Strahlung linienförmig emittierbar ist;
- die Sendeeinheit (84) ist so ausgestaltet, dass die Strahlung fächerförmig emittierbar ist;
- die Sendeeinheit (84) ist so ausgestaltet, dass die Strahlung in zumindest einer Ebene (88, 122) emittierbar ist.

9. Bodenreinigungsgerät nach Anspruch 8, **dadurch gekennzeichnet, dass** die Sendeeinheit (84) so ausgestaltet ist, dass die Strahlung in einer vertikalen Ebene (88) emittierbar ist, und/oder in einer relativ zur Horizontalen geneigten Ebene (122) in Richtung auf die Bodenfläche (14) emittierbar ist, wobei eine Schnittlinie der Ebene (122) der Emission mit der Horizontalen quer zu einer Längsrichtung (48) des Bodenreinigungsgerätes (120) ausgerichtet ist.

10. Bodenreinigungsgerät nach Anspruch 8 oder 9, **dadurch gekennzeichnet, dass** die Sendeeinheit (84) so ausgestaltet ist, dass die Strahlung in einer Ebene (88) emittierbar ist, die schräg und insbesondere quer zu einer Längsrichtung (48) des Bodenreinigungsgerätes (10) ausgerichtet ist und/oder dass die Strahlung bei Geradeausfahrt des Bodenreinigungsgerätes (120) auf einen dem Bodenreinigungsgerät (120) vorgelagerten Bereich ausgerichtet ist.

11. Bodenreinigungsgerät nach einem der voranstehenden Ansprüche, **dadurch gekennzeichnet, dass** die Sendeeinheit und die Empfangseinheit mittels eines Lichtschnittverfahrens Strahlung emittieren bzw. reflektierte Strahlung erfassen.

12. Bodenreinigungsgerät nach einem der voranstehenden Ansprüche, **dadurch gekennzeichnet, dass** während einer die Bodenfläche (14) reinigenden Bewegung des Bodenreinigungsgerätes (10; 120) Strahlung emittierbar, erfassbar und das Vorhandensein des Zwischenraumes (22, 130) ermittelbar ist.

13. Bodenreinigungsgerät nach einem der voranstehenden Ansprüche, **dadurch gekennzeichnet, dass** als Reinigungsaggregat (36, 38, 40) zumindest ein Tellerbesen (36) mit Reinigungsborsten (46) vorgesehen ist und/oder eine Schmutzaufnahmevorrichtung (40), welche Reinigungsborsten (46) bzw. welche Schmutzaufnahmevorrichtung (40) zum Eingreifen in den Zwischenraum (22, 130) zumindest teilweise über eine Außenkontur (32) des Bodenreinigungsgerätes (10; 120) hervorragen.

14. Bodenreinigungsgerät nach einem der voranstehenden Ansprüche, **dadurch gekennzeichnet, dass** mindestens ein Reinigungsaggregat (36, 38, 40) beweglich am Bodenreinigungsgerät (10; 120) gehalten ist und gegenüber einem Gehäuse (30) des Bodenreinigungsgerätes (10; 120) zum Eingreifen in den Zwischenraum (22, 130) ausrückbar ist, insbesondere dass das mindestens eine Reinigungsaggregat (36, 38, 40) am Bodenreinigungsgerät (10; 120) zum Ausrücken verschieblich und/oder schwenkbar gelagert ist.

15. Bodenreinigungsgerät nach einem der voranstehenden Ansprüche, **dadurch gekennzeichnet, dass** das Bodenreinigungsgerät (10; 120) eine mit der Steuereinheit (56) gekoppelte Antriebseinheit (52) aufweist zum Ausrücken des mindestens einen Reinigungsaggregates (36, 38, 40) relativ zum Bodenreinigungsgerät (10; 120).

16. Bodenreinigungsgerät nach einem der voranstehenden Ansprüche, **dadurch gekennzeichnet, dass** das Bodenreinigungsgerät (10; 120) eine Scheuersaugmaschine, eine Kehrsaugmaschine, eine Kehrscheuersaugmaschine oder eine Saugmaschine ist.

17. Verfahren zum Reinigen einer Bodenfläche eines Raumes mit einem selbstfahrenden und selbstlenkenden Bodenreinigungsgerät nach einem der voranstehenden Ansprüche, wobei ein innerhalb des Raumes angeordnetes Hindernis zumindest abschnittsweise frei von Kontakt mit der Bodenfläche ist, wobei Strahlung in Richtung auf das Hindernis und die Bodenfläche emittiert wird, um diese räumlich abzutasten, reflektierte Strahlung detektiert und ein diesbezügliches Detektionssignal bereitgestellt wird, ermittelt wird, ob zwischen dem Hindernis und der Bodenfläche ein Zwischenraum vorhanden ist und bejahendenfalls ein unterhalb des Hindernisses angeordneter Bodenflächenabschnitt als reinigbar angesehen und gereinigt wird, wobei mindestens ein Reinigungsaggregat des Bodenreinigungsgerätes in den Zwischenraum eingreift, wobei das Bodenreinigungsgerät während der Reinigung des Bodenflächenabschnittes in vorgegebenem oder vorgebbarem Abstand zum Hindernis verfahren wird, insbesondere parallel zum Hindernis.

## Claims

1. Self-propelled and self-steering floor cleaner comprising a cleaning device (34) with at least one cleaning unit (36, 38, 40) for cleaning a floor surface (14) of a room (12), at least sections of an obstacle (18, 124) located inside the room (12) not being in contact with the floor surface (14), the floor cleaner (10; 120) further comprising a transmission unit (84) for emitting radiation directed at the obstacle (18, 124) and the floor surface (14), in order to spatially scan these, a detection unit (86) for detecting reflected radiation and providing a detection signal relating thereto, a control unit (56) coupled to the detection unit (86), and a chassis (60) for movement on the floor surface (14) comprising a drive unit (64) coupled to the control unit (56), it being determinable by the control unit (56) from the detection signal whether a space (22, 130) is present between the obstacle (18, 124) and the floor surface (14), if so, a floor surface section (108, 134) located underneath the obstacle (18, 124) being regarded as cleanable, and the drive unit (64) being actuatable to move the floor cleaner (10; 120) for cleaning the floor surface section (108, 134), with at least one cleaning unit (36, 38, 40) reaching into the space (22, 130), **characterized in that** the drive unit (64) is actuatable to move the floor cleaner (10; 120) during the cleaning of the floor surface section (108, 134) at a predetermined or predeterminable distance from the obstacle (18, 124), in particular, parallel to the obstacle (18, 124).

2. Floor cleaner in accordance with claim 1, **characterized in that** the relative position of the floor cleaner (10; 120) and the floor surface section (108, 134) is determinable by the control unit (56).

3. Floor cleaner in accordance with claim 1 or 2, **characterized in that** the floor cleaner (10; 120) comprises a storage unit (68) in which a map (72) of the room (12) is storable, and a localization unit (76) for localizing the position of the floor cleaner (10; 120) on the floor surface (14), and **in that** the position of the floor surface section (108, 134) on the floor surface (14) is determinable, and the floor surface section (108, 134) is designatable in the map (72) as cleanable and preferably as positioned underneath the obstacle (18, 124).

4. Floor cleaner in accordance with any one of the preceding claims, **characterized in that** the extent (26, 140) of the floor surface section (108, 134) underneath the obstacle (18, 124) is determinable in the direction of propagation of the radiation by the control unit (56), preferably that as a function of the determined extent (26, 140), the floor cleaner (10; 120) is movable relative to the obstacle (18, 124) such that the at least one cleaning unit (36, 38, 40) reaches to a different extent into the space (22, 130) and/or **in that** as a function of the determined extent (26, 140), at least one cleaning unit (36, 38, 40) is transferable relative to the floor cleaner (10; 120) to a distance of different size so that the at least one cleaning unit (36, 38, 40) reaches to a different extent into the space (22, 130).

5. Floor cleaner in accordance with any one of the preceding claims, **characterized in that** the floor cleaner (10; 120) comprises a combined transmission and detection unit for emitting and detecting the radiation.

6. Floor cleaner in accordance with any one of the preceding claims, **characterized in that** at least one of the following applies to the transmission unit (84) and the detection unit (86):
- the transmission unit (84) is an ultrasonic transmission unit (84) with which ultrasonic radiation is emittable, and **in that** the detection unit is an ultrasonic detection unit;
- the transmission unit (84) is an optical transmission unit (84) with which optical and, in particular, infrared radiation and/or visible radiation is emittable, and **in that** the detection unit (86) is an optical detection unit (86).

7. Floor cleaner in accordance with any one of the preceding claims, **characterized in that** the transmission unit (84) comprises a laser light source and/or that the detection unit (86) is a digital camera (94) or comprises a digital camera (94), with which it is possible to take pictures of the obstacle (18, 124) and the floor surface (14), a component originating from the reflected radiation being determinable in the pictures.

8. Floor cleaner in accordance with any one of the preceding claims, **characterized in that** the transmission unit (84) is configured in accordance with at least one of the following:
- the transmission unit (84) is configured to emit the radiation linearly;
- the transmission unit (84) is configured to emit the radiation in the shape of a fan;
- the transmission unit (84) is configured to emit the radiation in at least one plane (88, 122).

9. Floor cleaner in accordance with claim 8, **characterized in that** the transmission unit (84) is configured to emit the radiation in a vertical plane (88) and/or to emit the radiation in a plane (122) inclined relative to the horizontal in the direction towards the floor surface (14), a line of intersection of the plane (122) of the emission with the horizontal being aligned transversely to a longitudinal direction (48) of the floor cleaner (120).

10. Floor cleaner in accordance with claim 8 or 9, **characterized in that** the transmission unit (84) is configured to emit the radiation in a plane (88) aligned at an incline and, in particular, transversely to a longitudinal direction (48) of the floor cleaner (10) and/or **in that** during straightahead travel of the floor cleaner (120), the radiation is directed at an area located in front of the floor cleaner (120).

11. Floor cleaner in accordance with any one of the preceding claims, **characterized in that** the transmission unit and the receiver unit emit radiation and detect reflected radiation, respectively, by means of a light-section procedure.

12. Floor cleaner in accordance with any one of the preceding claims, **characterized in that** during a movement of the floor cleaner (10; 120) cleaning the floor surface (14), radiation is emittable and detectable and the presence of the space (22, 130) is determinable.

13. Floor cleaner in accordance with any one of the preceding claims, **characterized in that** at least one circular broom (36) with cleaning bristles (46) and/or a dirt pick-up device (40) is/are provided as cleaning unit (36, 38, 40), said cleaning bristles (46) and said dirt pick-up device (40), respectively, protruding at least partially over an outer contour (32) of the floor cleaner (10; 120) in order to reach into the space (22, 130).

14. Floor cleaner in accordance with any one of the preceding claims, **characterized in that** at least one cleaning unit (36, 38, 40) is held so as to be movable on the floor cleaner (10; 120) and is able to be moved out relative to a housing (30) of the floor cleaner (10; 120) in order to reach into the space (22, 130), in particular, that the at least one cleaning unit (36, 38, 40) is displaceably and/or pivotably mounted on the floor cleaner (10; 120) for moving out.

15. Floor cleaner in accordance with any one of the preceding claims, **characterized in that** the floor cleaner (10; 120) comprises a drive unit (52) coupled to the control unit (56) for moving out the at least one cleaning unit (36, 38, 40) relative to the floor cleaner (10; 120).

16. Floor cleaner in accordance with any one of the preceding claims, **characterized in that** the floor cleaner (10; 120) is a scrubbing-suction machine, a sweeping-suction machine, a sweeping-scrubbing-suction machine or a suction machine.

17. Method for cleaning a floor surface of a room with a self-propelled and self-steering floor cleaner in accordance with any one of the preceding claims, at least sections of an obstacle located inside the room not being in contact with the floor surface, wherein radiation is emitted in the direction of the obstacle and the floor surface in order to spatially scan these, reflected radiation is detected and a detection signal relating thereto is provided, and it is determined whether a space is present between the obstacle and the floor surface and, if so, a floor surface section located underneath the obstacle is regarded as cleanable and is cleaned, with at least one cleaning unit of the floor cleaner reaching into the space, wherein the floor cleaner is moved during the cleaning of the floor surface section at a predetermined or predeterminable distance from the obstacle, in particular, parallel to the obstacle.

## Revendications

1. Appareil de nettoyage de sol automoteur et autoguidé, qui comprend un dispositif de nettoyage (34) avec au moins un groupe de nettoyage (36, 38, 40) pour nettoyer une surface de sol (14) d'un local (12),
un obstacle (18, 124) agencé à l'intérieur du local (12) étant, au moins par secteurs, exempt de contact avec la surface de sol (14),
l'appareil de nettoyage de sol (10; 120) comprenant par ailleurs, une unité d'émission (84) pour l'émission d'un rayonnement dirigé sur l'obstacle (18, 124) et la surface de sol (14) en vue de leur exploration par balayage spatial, une unité de détection (86) pour relever un rayonnement réfléchi et élaborer un signal de détection associé, une unité de commande (56) couplée à l'unité de détection (86), ainsi qu'un train de roulement (60) destiné à la circulation sur la surface de sol (14) et présentant une unité d'entrainement (64) couplée à l'unité de commande (56), l'appareil de nettoyage de sol étant tel, que l'unité de commande (56) puisse, au regard du signal de détection, déterminer s'il existe un espace intermédiaire (22, 130) entre l'obstacle (18, 124) et la surface de sol (14), et en cas de réponse positive, un secteur de surface de sol (108, 134) agencé sous l'obstacle (18, 124) est considéré comme susceptible d'être nettoyé, et que l'unité d'entraînement (64) puisse être commandée pour déplacer l'appareil de nettoyage de sol (10; 120) en vue de nettoyer ledit secteur de surface de sol (108, 134), au moins un groupe de nettoyage (36, 38, 40) s'engageant dans ledit espace intermédiaire (22, 130),
**caractérisé en ce que** l'unité d'entraînement (64) peut être commandée de manière à déplacer l'appareil de nettoyage de sol (10; 120), pendant le nettoyage dudit secteur de surface de sol (108, 134), à une distance d'espacement de l'obstacle (18, 124), prédéterminée ou pouvant être prédéterminée, notamment parallèlement à l'obstacle (18, 124).

2. Appareil de nettoyage de sol selon la revendication 1, **caractérisé en ce que** l'unité de commande (56) est en mesure de déterminer la position relative de l'appareil de nettoyage de sol (10; 120) et dudit secteur de surface de sol (108, 134).

3. Appareil de nettoyage de sol selon la revendication 1 ou la revendication 2, **caractérisé en ce que** l'appareil de nettoyage de sol (10; 120) comporte une unité de mémoire (68) dans laquelle peut être mémorisée une carte (72) du local (12), et une unité de localisation (76) pour localiser la position de l'appareil de nettoyage de sol (10; 120) sur la surface de sol (14), et **en ce que** la position dudit secteur de surface de sol (108, 134) sur la surface de sol (14) peut être déterminée, et ledit secteur de surface de sol (108, 134) peut être caractérisé sur la carte (72) comme étant susceptible d'être nettoyé et de préférence comme étant positionné sous l'obstacle (18, 124).

4. Appareil de nettoyage de sol selon l'une des revendications précédentes, **caractérisé en ce que** l'unité de commande (56) est en mesure de déterminer l'étendue (26, 140) dudit secteur de surface de sol (108, 134) sous l'obstacle (18, 124) dans la direction de propagation du rayonnement, de préférence **en ce qu'**en fonction de l'étendue (26, 140) déterminée, l'appareil de nettoyage de sol (10; 120) peut être déplacé par rapport à l'obstacle (18, 124) de manière telle, que ledit au moins un groupe de nettoyage (36, 38, 40) s'engage de façon plus ou moins importante dans l'espace intermédiaire (22, 130), et/ou qu'au moins un groupe de nettoyage (36, 38, 40) puisse être transféré, en fonction de ladite étendue (26, 140) déterminée, à une distance plus ou moins importante par rapport à l'appareil de nettoyage de sol (10; 120), pour que ledit au moins un groupe de nettoyage (36, 38, 40) s'engage de façon plus ou moins importante dans l'espace intermédiaire (22, 130).

5. Appareil de nettoyage de sol selon l'une des revendications précédentes, **caractérisé en ce que** l'appareil de nettoyage de sol (10; 120) comporte une unité d'émission et de détection combinée pour émettre et relever le rayonnement.

6. Appareil de nettoyage de sol selon l'une des revendications précédentes, **caractérisé en ce que** concernant l'unité d'émission (84) et l'unité de détection (86), celles-ci présentent au moins l'une des configurations suivantes :
- l'unité d'émission (84) est une unité d'émission d'ultrasons (84) permettant d'émettre un rayonnement ultrasonore, et l'unité de détection est une unité de détection d'ultrasons ;
- l'unité d'émission (84) est une unité d'émission optique (84) permettant d'émettre un rayonnement optique, notamment un rayonnement infrarouge et/ou un rayonnement visible, et l'unité de détection (86) est une unité de détection optique (86).

7. Appareil de nettoyage de sol selon l'une des revendications précédentes, **caractérisé en ce que** l'unité d'émission (84) comprend une source de lumière laser, et/ou **en ce que** l'unité de détection (86) est une caméra numérique (94) ou comprend une telle caméra, permettant des prises de vues de l'obstacle (18, 124) et de la surface de sol (14), une fraction conséquente au rayonnement réfléchi pouvant être déterminée dans les prises de vues.

8. Appareil de nettoyage de sol selon l'une des revendications précédentes, **caractérisé en ce que** l'unité d'émission (84) est conçue selon l'une au moins des façons suivantes :
- l'unité d'émission (84) est configurée pour permettre l'émission du rayonnement sous forme de ligne ;
- l'unité d'émission (84) est configurée pour permettre l'émission du rayonnement en éventail ;
- l'unité d'émission (84) est configurée pour permettre l'émission du rayonnement dans au moins un plan (88, 122).

9. Appareil de nettoyage de sol selon la revendication 8, **caractérisé en ce que** l'unité d'émission (84) est configurée pour permettre au rayonnement d'être émis dans un plan vertical (88), et/ou d'être émis dans un plan (122) incliné par rapport à l'horizontale, en direction de la surface de sol (14), une ligne d'intersection du plan (122) de l'émission avec l'horizontale étant orientée transversalement à une direction longitudinale (48) de l'appareil de nettoyage de sol (120).

10. Appareil de nettoyage de sol selon la revendication 8 ou la revendication 9, **caractérisé en ce que** l'unité d'émission (84) est configurée pour permettre au rayonnement d'être émis dans un plan (88), qui est orienté de manière inclinée et notamment de manière transversale par rapport à une direction longitudinale (48) de l'appareil de nettoyage de sol (120), et/ou **en ce que** le rayonnement, lors d'une marche en ligne droite de l'appareil de nettoyage de sol (120) est orienté en direction d'une zone située au-devant de l'appareil de nettoyage de sol (120).

11. Appareil de nettoyage de sol selon l'une des revendications précédentes, **caractérisé en ce que** l'unité d'émission et l'unité de réception émettent et respectivement relèvent un rayonnement moyennant une méthode par sections lumineuses.

12. Appareil de nettoyage de sol selon l'une des revendications précédentes, **caractérisé en ce que** pendant un mouvement de déplacement de l'appareil de nettoyage de sol (10; 120) produisant un nettoyage de la surface de sol (14), il est possible d'émettre et de relever un rayonnement, et de déterminer la présence dudit espace intermédiaire (22, 130).

13. Appareil de nettoyage de sol selon l'une des revendications précédentes, **caractérisé en ce que** ce qu'il est prévu, en guise de groupe de nettoyage (36, 38, 40), au moins une brosse rotative en assiette (36) avec des poils de nettoyage (40), et/ou un dispositif de collecte de salissures (40), lesdits poils de nettoyage (46) ou respectivement ledit dispositif de collecte de salissures (40) dépassant au moins partiellement à l'extérieur d'un contour extérieur (32) de l'appareil de nettoyage de sol (10; 120), en vue de pouvoir s'engager dans ledit espace intermédiaire (22, 130) .

14. Appareil de nettoyage de sol selon l'une des revendications précédentes, **caractérisé en ce qu'**au moins un groupe de nettoyage (36, 38, 40) est maintenu de manière déplaçable sur l'appareil de nettoyage de sol (10; 120), et peut être extrait d'un carter (30) de l'appareil de nettoyage de sol (10; 120) pour s'engager dans ledit espace intermédiaire (22, 130), et notamment **en ce que** ledit au moins un groupe de nettoyage (36, 38, 40) est monté coulissant et/ou pivotant sur l'appareil de nettoyage de sol (10; 120), en vue de son extraction.

15. Appareil de nettoyage de sol selon l'une des revendications précédentes, **caractérisé en ce que** l'appareil de nettoyage de sol (10; 120) comporte une unité d'entrainement (52) couplée à l'unité de commande (56) pour l'extraction dudit au moins un groupe de nettoyage (36, 38, 40) relativement à l'appareil de nettoyage de sol (10; 120).

16. Appareil de nettoyage de sol selon l'une des revendications précédentes, **caractérisé en ce que** l'appareil de nettoyage de sol (10; 120) est une machine de lavage à aspiration (autolaveuse), une machine de balayage à aspiration (auto-balayeuse), une machine de lavage et de balayage à aspiration (auto-balayeuse-laveuse) ou une machine d'aspiration.

17. Procédé de nettoyage d'une surface de sol d'un local à l'aide d'un appareil de nettoyage de sol automoteur et autoguidé selon l'une des revendications précédentes, d'après lequel un obstacle agencé à l'intérieur du local est, au moins par secteurs, exempt de contact avec la surface de sol, d'après lequel on émet un rayonnement en direction de l'obstacle et de la surface de sol en vue de leur exploration par balayage spatial, on détecte un rayonnement réfléchi et on élabore un signal de détection associé, on détermine s'il existe un espace intermédiaire entre l'obstacle et la surface de sol, et en cas de réponse positive, si un secteur de surface de sol agencé sous l'obstacle peut être considéré comme susceptible d'être nettoyé, et ce secteur est alors nettoyé, d'après lequel au moins un groupe de nettoyage de l'appareil de nettoyage de sol s'engage dans ledit espace intermédiaire, et d'après lequel l'appareil de nettoyage de sol est déplacé, pendant le nettoyage dudit secteur de surface de sol, à une distance d'espacement de l'obstacle, prédéterminée ou pouvant être prédéterminée, notamment parallèlement à l'obstacle.
